# EUROPÄISCHE PATENTSCHRIFT

(11) **EP 3 446 013 B1**
(45) Veröffentlichungstag und Bekanntmachung des Hinweises auf die Patenterteilung: **19.05.2021**
(21) Anmeldenummer: 17719495.8
(22) Anmeldetag: 30.03.2017
(51) Int. Cl.: F16K 31/06

(54) **ELEKTROMAGNETISCH BETÄTIGBARE VENTILVORRICHTUNG**
ELECTROMAGNETICALLY OPERABLE VALVE DEVICE
DISPOSITIF SOUPAPE À COMMANDE ÉLECTROMAGNÉTIQUE

(30) Priorität: 21.04.2016 DE 102016107446; 03.08.2016 DE 102016114347
(43) Veröffentlichungstag der Anmeldung: 27.02.2019
(73) Patentinhaber: Eto Magnetic GmbH, 78333 Stockach (DE)
(72) Erfinder: THODE, Oliver, 78333 Stockach (DE); RAFF, Viktor, 78467 Konstanz (DE)
(74) Vertreter: Patent- und Rechtsanwälte Behrmann Wagner PartG mbB
(86) Internationale Anmeldenummer: PCT/EP2017/057621
(87) Internationale Veröffentlichungsnummer: WO 2017/182251

(56) Entgegenhaltungen:
- EP-A2- 2 557 343
- EP-A2- 2 713 085
- DE-A1-102011 052 526
- US-A1- 2006 180 783

## Beschreibung

Die vorliegende Erfindung betrifft eine elektromagnetisch betätigbare Ventilvorrichtung nach dem Oberbegriff des Hauptanspruchs. Ferner betrifft die vorliegende Erfindung eine Verwendung einer derartigen Ventilvorrichtung.

Elektromagnetisch betätigbare Ventilvorrichtungen der oberbegrifflichen Art sind aus der DE 298 25 210 U1 der Anmelderin bekannt. In einem Ventilgehäuse ist dabei relativ zu einer stationären Spuleneinheit sowie zu einer mit dieser zusammenwirkenden stationären Kerneinheit eine als Reaktion auf die Spuleneinheit bewegbar vorgesehene Ankereinheit geführt, welche eine Verschlusseinheit trägt. Durch Bewegung der Ankereinheit verschließt dabei die Ankereinheit im Gehäuse (typischerweise axial aneinander gegenüberliegend vorgesehene) erste bzw. zweite Fluidanschlüsse wechselweise, wobei, bei typischer Ausgestaltung als 3/2-Ventilvorrichtung (also mit drei Fluidanschlüssen bei zwei Schaltpositionen) die das wechselweise Verschließen bewirkende Ankerbewegung einen Fluidkanal des ersten bzw. zweiten Fluidanschlusses zu einem weiteren Fluidanschluss (typischerweise auch als Arbeitskanal bezeichnet) freigibt.

Bei einer derartigen Vorrichtung wird ein NC-(normally closed = im unbestromten Zustand der Spuleneinheit geschlossen) bzw. NO-(normally opened = im unbestromten Zustand geöffnet) Betriebszustand der Ventilvorrichtung herbeigeführt durch Kraftspeichermittel in Form einer Feder, welche, sich typischerweise einends von einem Gehäuseabschnitt abstützend, die Ankereinheit in die gewünschte stromlose Verschlussposition vorspannt und sich zu diesem Zweck von einem äußeren Rand- bzw. Ringabschnitt der Ankereinheit abstützt.

Um einen Fluidfluss entlang der typischerweise koaxial zu einer zentrischen Bohrung in der Kerneinheit bewegbaren Ankereinheit zum zweiten Fluidanschluss sicherzustellen, sind mantelseitig des (typischerweise zylindrischen) Ankerkörpers achsparallel verlaufende Kanäle eingeformt, an welchen dann der Fluidfluss entlang des Außenmantels der Ankereinheit (und begrenzt von einer umgebenden Innenführung des Gehäuses) erfolgen kann.

Eine derartige Magnetventilvorrichtung ist aus dem Stand der Technik allgemein bekannt und hat sich für verschiedenste Anwendungsgebiete durchgesetzt, insbesondere als diese Vorrichtung durch ihre konstruktive Einfachheit Betriebssicherheit mit einfacher Montierbarkeit kombiniert.

Allerdings hat sich eine derartige, aus der als gattungsbildend herangezogenen DE 298 25 210 U1 bekannte Vorrichtung als punktuell nach wie vor verbesserungsbedürftig erwiesen, insbesondere als im Hinblick auf eine industrielle Großserienfertigung und optimierte Betriebseigenschaften vor allem die bekannten Kraftspeichermittel in Form der von außen angreifenden Druckfeder nicht ideal sind: Einerseits verlangt die typischerweise als konisch zulaufende Druckfeder ausgebildete Kraftspeichereinheit nach händischer Bestückung im Fertigungsvorgang, da derartige Federn in gängigen Produktionsanlagen keine automatisierte Montage gestatten. Gleichzeitig muss eine solche Feder, angesichts der zum wechselseitigen Verschließen des ersten bzw. zweiten Fluidanschlusses mit einer durchgehenden (alternativ einer beidseitig vulkanisiert vorgesehenen) polymeren Verschlusseinheit ausgestatteten Ankereinheit, für eine vergleichsweise hohe Federkraft ausgelegt sein, denn bedingt durch die geometrischen Bedingungen der bekannten Technologie ist der die Verschlusseinheit tragende Ankerkörper massiv und damit relativ schwer.

Diese Eigenschaft wiederum steht im Zusammenhang mit der beschriebenen Notwendigkeit, die Ankereinheit mantelseitig mit Nuten oder vergleichbaren längs, d.h. parallel zur axialen Richtung, verlaufenden Nuten zur Fluidführung zu versehen. Eine derartige Nutung bzw. Profilierung führt jedoch insbesondere im Dauergebrauch zu nachteiligen Einkerbungen bzw. unerwünschtem Materialabtrag an einer die Ankereinheit umschließenden Führung (z.B. Ankerführungsrohr), so dass auch hier Verbesserungsbedarf besteht. Darüber hinaus ist zudem ein in den Nuten bewirkter Fluidfluss im Hinblick auf einen Fluidflusswiderstand, etwa Luft, nicht optimal, so dass auch insoweit Nachteile bestehen. Schließlich entstehen weitere Strömungsverluste durch den Umstand, dass ein Fluidfluss vom bzw. zum weiteren Fluidanschluss (Arbeitsanschluss) geometriebedingt durch einen Abschnitt der Druckfeder fließt, so dass eine effektive Nennweite bzw. Strömungsweite des Anschlusses durch die Federmittel reduziert ist.

Ein zusätzlicher Nachteil der bekannten Nutenlösung zur Fluidführung entlang der Ankereinheit liegt darin, dass Nuten oder dgl. fluidführende Profilierungen am Ankermantel eine magnetisch wirksame Ankerweite vermindern bzw. begrenzen, insoweit eine negative Wechselwirkung zur Fluidführung besteht: Je größer die ankerseitigen Nuten mit dem Zweck einer Verbesserung des Fluidflusses gestaltet werden, desto größer wird der magnetische Nachteil.

Ferner ist aus der DE 10 2011 052 526 A1 der Anmelderin eine Ventilvorrichtung bekannt, die eine stationäre Kerneinheit und eine in Reaktion auf einer Bestromung einer stationären Spuleneinheit bewegbare Ankereinheit umfasst, wobei die Kerneinheit neben einem Kernkörper aus einem magnetischen Material ein als Distanzmittel bezeichnetes Rohr- und/oder Hülsenelement aus einem nicht magnetischen Material umfasst.

Ferner sind noch die EP 2 713 085 A3 sowie die EP 2 557 343 A2 zu nennen.

Aufgabe der vorliegenden Erfindung ist es daher, eine elektromagnetisch betätigbare Ventilvorrichtung nach dem Oberbegriff des Hauptanspruchs im Hinblick auf ihre Betätigungs-, Betriebs- und Effizienzeigenschaften im Hinblick auf optimierte Magnet- und Fluidführungsbedingungen zu verbessern, dabei insbesondere eine elektromagnetisch betätigbare und als 3/2- oder 2/2-Ventil einsetzbare Ventilvorrichtung zu schaffen, welche einfach und automatisiert fertigbar ist, dabei im Hinblick auf eine notwendige Magnetkraft (und Federkraft) optimiert ist, ferner geringere Anforderungen an ein (typischerweise polymeres) Dichtmaterial für die Verschlusseinheit stellt und im Hinblick auf einen (typischerweise pneumatischen) Fluidfluss in den erfindungsgemäß geschalteten Fluidkanälen Strömungsverluste bzw. Strömungswiderstände minimiert.

Die Aufgabe wird durch die elektromagnetisch betätigbare Ventilvorrichtung mit den Merkmalen des Hauptanspruchs gelöst; vorteilhafte Weiterbildungen der Erfindung sind in den Unteransprüchen beschrieben. Zusätzlich Schutz im Rahmen der Erfindung wird beansprucht für eine Verwendung einer derartigen erfindungsgemäßen elektromagnetisch betätigbaren Ventilvorrichtung für pneumatisches Fluid, wobei sich eine Verwendung für bzw. in einem Kraftfahrzeug-Pneumatiksystem als besonders bevorzugte und günstige Verwendung herausgestellt hat. Weiterhin wird erfindungsgemäß eine Verwendung einer derartigen Vorrichtung beansprucht zur Realisierung eines 2/2-Wegeventils, durch lediglich partielle Beschaltung der erfindungsgemäßen Fluidanschlüsse, und es wird Schutz beansprucht für eine bevorzugte Verwendung der erfindungsgemäßen Ventilvorrichtung als stromlos geschlossene-Vorrichtung (NC) wie auch als stromlos offene Ventilvorrichtung (NO) durch entsprechendes vertauschtes verbraucherseitiges Anschließen des erfindungsgemäßen ersten bzw. zweiten Fluidanschlusses.

In erfindungsgemäß vorteilhafter Weise ist zunächst die Kerneinheit erfindungsgemäß in Form von zwei (einstückig aneinandersitzenden) Abschnitten realisiert, nämlich einerseits dem Kernkörper und andererseits dem erfindungsgemäßen, langgestreckten und den Kernkörper axial fortsetzenden Rohr bzw. Hülsenabschnitt, welcher, weiter bevorzugt in der Art einer Düse, mittig zur Fluidführung durchbohrt ist und endseitig zur Verbindung zum zweiten Fluidanschluss die zweite Verschlussposition zum schließenden Aufgreifen durch die Verschlusseinheit der Ankereinheit anbietet.

Der langgestreckte Rohr- bzw. Hülsenabschnitt der Kerneinheit ermöglicht nunmehr erfindungsgemäß vorteilhaft ein Übergreifen durch die (selbst wiederum erfindungsgemäß vorteilhaft und weiterbildend becher- bzw. topfartig ausgestaltete) Ankereinheit, so dass der Rohr- bzw. Hülsenabschnitt in einen offenen Vertiefungs- bzw. Hohlbereich der Ankereinheit eintaucht und erst im eingetauchten Zustand dann die Verschlusseinheit (welche selbst wiederum bevorzugt bodenseitig der Ankereinheit ausgebildet ist) das freie Ende (Düsenabschnitt) des Rohr- bzw. Hülsenabschnitts zum Verschließen des zweiten Fluidanschlusses dichten kann.

Eine derartige erfindungsgemäße Geometrie ermöglicht damit zunächst das Vorsehen einer zylindrischen Feder, weiter bevorzugt Druckfeder, als Kraftspeicher, welche sich einends dann am (im Durchmesser verbreiterten) Kernkörper, anderenends im Boden der Ankereinheit abstützen kann und so etwa eine stromlos geschlossene (NC-) Konfiguration im Hinblick auf den ersten Fluidanschluss realisiert; dieser ist erfindungsgemäß und vorteilhaft ermöglicht durch einen der Kerneinheit axial gegenüberliegenden und entsprechend mit einer gegenüberliegenden Dichtfläche der Verschlusseinheit zusammenwirkenden Ventilsitz zum ersten Fluidanschluss geöffnet. Erfindungsgemäß vorteilhaft gestattet damit eine solche Vorrichtung zunächst das vollautomatisierte Montieren der zylindrischen Feder und damit eine weitere Effizienzsteigerung in der Montage.

Zusätzlich realisiert diese Geometrie auch noch weitere Vorteile, nämlich etwa dadurch, dass durch die vorteilhafte Becher bzw. Topfform (welche das axiale Übergreifen der Ankereinheit bezogen auf den Rohr- bzw. Hülsenabschnitt gestattet) nicht nur eine deutliche Gewichtsreduzierung der Ankereinheit auftritt, welche wiederum die notwendigen Federkräfte der Kraftspeichermittel reduziert, auch erfordert eine derartige erfindungemäße Becher- bzw. Topfform der Ankereinheit mit bodenseitiger Verschlusseinheit (integriert in die Ankereinheit) eine deutlich einfachere Dichtungstechnologie für diese Verschlusseinheit (nämlich einen axial kürzeren Polymerbereich mit dadurch reduzierten Ausdehnungs- bzw. Temperatureffekten). Auch vermindert der leichtere (erfindungsgemäß weiterbildend etwa hohlgebohrte) Anker deutlich potenziell schädliche Vibrationen und verringert durch sein geringeres Gewicht die Erfordernisse an eine notwendige Magnetkraft für den Antrieb der Ankereinheit, was wiederum Vorteile für die magnetische Auslegung der weiteren beteiligten Komponenten, etwa die flussleitende Geometrie für den Elektromagnetfluss oder die Ausgestaltung der Spulenmittel, bringt.

Zur magnetischen Optimierung ist es dabei erfindungsgemäß vorgesehen, den Rohr- bzw. Hülsenabschnitt der Kerneinheit, typischerweise an einem vom Kernkörper axial beabstandeten Mantelabschnitt, mit einer Nut, einer Materialvertiefung, einem Materialeinstich, und/oder einem innen- oder außenseitigen Materialabtrag so zu versehen, dass an diesem materialreduzierten Mantelabschnitt eine magnetische Widerstandserhöhung für einen durch den Rohr- bzw. Hülsenabschnitt fließenden Magnetfluss auftritt.

Dies kann einerseits durch einen Materialabtrag, z.B. durch ein spanendes Verfahren, im magnetisch leitenden Abschnitt erfolgen, wobei dieser Materialabtrag sowohl im Außenmantel, d.h. radial außenseitig am Rohr- bzw. Hülsenabschnitt, erfolgen kann, als auch an einem inneren Mantelabschnitt im Rohr- bzw. Hülsenabschnitt, typischerweise dann zu realisieren durch eine (ggf. gestufte, abschnittsweise aufgeweitete) zentrische Bohrung, alternativ auch durch ein inneres Aufweiten mit einem geeigneten Fräs- oder Drehwerkzeug.

Andererseits kann eine nicht erfindungsgemäße Materialveränderung oder -beeinflussung durch etwa eine lokale thermische Behandlung (z.B. Glühen im Mantelabschnitt) erfolgen, mit dem Ziel, das magnetisch leitende Material dort in seiner magnetischen Leitfähigkeit herabzusetzen. Wiederum alternativ und nicht erfindungsgemäß ist eine (z.B. geschweißte) axiale Abfolge aus magnetisch gut sowie magnetisch nicht bzw. schlecht leitenden Metallmaterialien zur Realisierung des Rohr-Hülsen-Abschnitts denkbar. Dies ist insoweit vorteilhaft und effizienzerhöhend, als damit effektiv vermieden werden kann, dass ein signifikanter magnetischer Flussanteil entlang des Rohr- bzw. Hülsenabschnitts und dann quer zur Ankereinheit fließt, insoweit einen unerwünschten magnetischen Nebenschluss vermeidet.

In bevorzugter Weiterbildung ist die erfindungsgemäße Verschlusseinheit nicht ausschließlich aus einem (z.B. polymeren) Dichtungsmaterial realisiert, vielmehr, und weiter bevorzugt etwa in einer querschnittlichen Doppel-T-Form, in einem umgebenden, harten Körper, welcher selbst dann in die Ankereinheit integriert ist bzw. deren Boden ausbildet, geformt, so dass axial beidends gut dichtende bzw. Kontaktflächen als Verschlussflächen entstehen, welche durch den Anker einen bestmöglichen Verschluss- bzw. Anpressdruck im Hinblick auf ihren jeweiligen Sitz erhalten. Dabei ist vorteilhaft vorgesehen, dass in dem das eigentliche polymere Dichtmaterial haltenden Trägerabschnitt (aus dem unelastischen, gleichwohl etwa aus Gründen einer automatisierten Fertigbarkeit im KunststoffSpritzverfahren selbst aus polymerem Material hergestellt) Durchbrüche oder dgl. Durchlässe vorgesehen sind, welche den Fluidfluss, insbesondere vom weiteren Fluidanschluss zum zweiten Fluidanschluss, kanalisieren; eine derartige Ausbildung realisiert dann den Strömungs- und Effizienzvorteil, dass die erfindungsgemäßen Kraftspeichermittel (bevorzugt als zylindrische Druckfeder realisiert) von diesem Fluidfluss unbeeinflusst bleiben, nämlich außerhalb von diesen liegen und insoweit Strömungsverluste vermieden werden können.

Auf die erfindungsgemäß beschriebene Weise wird somit eine elektromagnetisch betätigbare Ventilvorrichtung realisiert, welche die Betätigungs- und Betriebsvorteile der bereits existierenden, gattungsbildenden Technologie in mehreren, gleichwohl synergistisch miteinander zusammenwirkenden technischen Aspekten weiterbildet, dabei Vorteile in der Fertigung mit Effizienzvorteilen im Hinblick auf die magnetischen und Strömungseigenschaften kombiniert und im Ergebnis eine Ventilvorrichtung als 3/2-Struktur realisiert, welche zwar günstig für die pneumatische Fluidschaltung in einem Kraftfahrzeugkontext geeignet ist, jedoch weder auf diese Verwendung beschränkt ist, noch etwa die mögliche 3/2-Topologie notwendigerweise so geschaltet werden muss. Vielmehr ist es durch geeignete Kontaktierung der Fluidanschlüsse auch ohne weiteres möglich, die Vorrichtung als 2/2-Ventil zu benutzen, und durch geeignetes Vertauschen insbesondere des ersten und des zweiten Fluidanschlusses. Im Einsatzkontext lässt sich sowohl eine NO-, als auch eine NC-Funktionalität realisieren.

Weitere Vorteile, Merkmale und Einzelheiten der Erfindung ergeben sich aus der nachfolgenden Beschreibung bevorzugter Ausführungsbeispiele sowie anhand der Figuren.

Diese zeigen in:

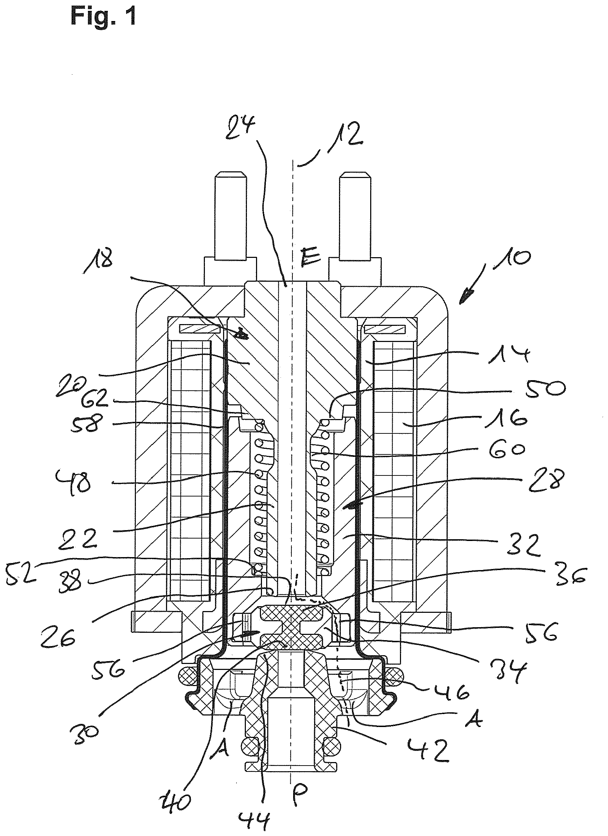

- Fig. 1: eine Längsschnittansicht durch die elektromagnetisch betätigbare Ventilvorrichtung gemäß einer ersten bevorzugten Ausführungsform als 3/2-Ventil in NC-Konfiguration bei bodenseitig vorgesehenem und als ersten Fluidanschluss konfiguriertem Druckanschluss sowie gegenüberliegendem und der Kerneinheit zugeordnetem Entlüftungsanschluss; und

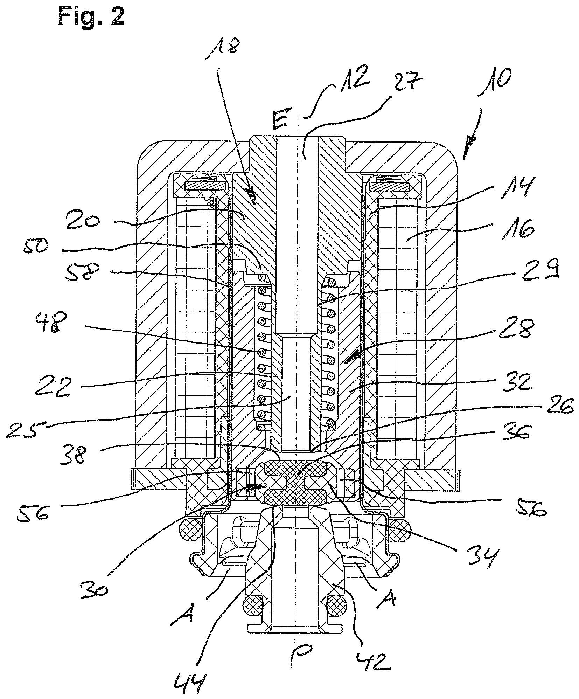

- Fig. 2:: eine Längsschnittansicht analog der Darstellung der Fig. 2 einer zweiten Ausführungsform der elektromagnetisch betätigbaren Ventilvorrichtung mit einer gegenüber dem ersten Ausführungsbeispiel der Fig. 1 mantelseitig innenliegenden Abschnitt mit Materialabtrag zum Erzeugen einer lokalen magnetischen Widerstandserhöhung.

Die Fig. 1 zeigt in der Längsschnittansicht des ersten Ausführungsbeispiels ein umgebendes Ventilgehäuse 10, welches eine im Wesentlichen radialsymmetrisch (alternativ: C-Bügel-förmig) um eine Längsachse 12 ausgebildete Ventiltechnologie aufnimmt. Dabei umschließt eine auf einem Spulenträger 14 gehaltene Wicklung 16 (Spuleneinheit) eine gleichermaßen stationäre Kerneinheit 18, welche aus einem in der Fig. 1 obenliegenden Kernkörper 20 und einem sich daran einstückig anschließenden Rohr- bzw. Hülsenabschnitt 22 gebildet ist, welcher gegenüber dem Körper 20 einen verminderten Durchmesser aufweist. Eine Axialbohrung 24 erstreckt sich durch die Kerneinheit, bildet in Richtung auf das Gehäuseäußere den Entlüftungsanschluss E (als erfindungsgemäßen zweiten Fluidanschluss) aus und mündet düsenartig am gegenüberliegenden Ende in einen durch Bördeln gefertigten düsenartigen Auslass 26, welcher als Ventilsitz für eine nachfolgend zu beschreibende, an einer Ankereinheit 28 sitzenden und von dieser bewegten Verschlusseinheit 30 dient.

Konkret ist die Ankereinheit 28 realisiert aus einem topf- bzw. becherförmigen Ankerkörper 32, welcher, in der Fig. 1 nach oben durch eine Hohlbohrung geöffnet, zum Aufnehmen bzw. seitlichen Übergreifen eines wesentlichen Abschnitts des Rohr- bzw. Hülsenabschnitts 22 ausgebildet ist. Im unteren Endbereich und damit zum Ausbilden eines Ankerbodens wird der Körper 32 geschlossen von dem aus einem harten polymeren Material gebildeten Verschlusskörper 34, in welchen in der Art einer einstückigen, querschnittlichen Doppel-T-Form, polymeres, weiches und dichtendes Material 36 durch Spritzen so eingebracht ist, dass entlang der axialen Richtung (d.h. entlang der Achse 12) einander gegenüberliegende Dichtflächen 38, 40 entstehen, von denen eine (in der Fig. 1 obere) Dichtfläche 38 dichtend zum Greifen auf das Auslassende 26 des Stößelabschnitts 22 bemessen und ausgebildet ist.

Am axial gegenüberliegenden Ende ist die Dichtfläche 40 zum dichtenden Zusammenwirken mit einem an einer Ventilsitzbaugruppe 42 ausgebildeten, gleichermaßen düsenartigen Ventilsitz 44 ausgestaltet, welcher in Verbindung mit einem Druckanschluss P (als erster Fluidanschluss im Sinne der Erfindung) steht.

Innerhalb der Baugruppe 42, benachbart der dem Fluideinlass T zugeordneten Bohrung, ist, radial umlaufend, ein Arbeitsanschluss A ausgebildet, welcher, entsprechend einer Stell- und Verschlussposition der Verschlusseinheit 30 am Anker 28, einerseits zum Entlüftungsanschluss E geöffnet ist (dies entspricht dem stromlosen Stell- bzw. Verschlusszustand der Fig. 1 und ist durch die gestrichelte Linie 46 bezeichnet), wobei die Verschlusseinheit 30 mit ihrer unteren Dichtfläche 40 auf den Ventilsitz 44 greift und den Fluidanschluss P verschließt. Andererseits verschließt bei Bestromung der Spule 32 die Ankereinheit gegenüber der Position der Fig. 1 und gegen eine Rückstellwirkung einer zylindrischen Druckfeder 48 (welche sich einends von einem Ringabsatz 50 am Kernkörper 20, anderenends an einem innenliegenden Ringabsatz 52 abstützt) dann die Dichtfläche 38 den als kernseitigen Ventilsitz 26 wirkenden Auslass des Rohr- bzw. Hülsenabschnitts 22 und ermöglicht so eine Fluidkommunikation vom Druckanschluss P zum Arbeitsanschluss A.

Es wird deutlich, dass die Ausgestaltung und Lagerung der Druckfeder 48 nicht nur eine zylindrische und damit automatisiert montierbare Form ermöglicht, auch liegt diese Druckfeder außerhalb des Fluidpfades (Fluidkanals) sowohl bei einer Fluidkommunikation E-A (gemäß gestrichelter Linie 46 in Fig. 1), als auch außerhalb einer im alternativen Schaltzustand ermöglichten Fluidkommunikationen P-A. Entsprechend bewirkt die Feder keinerlei Strömungsbeeinträchtigung, und zusätzlich gestaltet die gezeigte Federform in Verbindung mit der (durch die Becherform erreichten) gewichtsverminderten Ankerausgestaltung eine geringere Federkraft, womit wiederum eine geringere notwendige Magnetkraft für die Ankerbewegung verbunden ist, mithin also auch dieses Verhalten gegenüber dem gattungsbildenden Stand der Technik optimiert ist.

Die Längsschnittansicht der Fig. 1 verdeutlicht zusätzlich neben der aus mehreren Materialien realisierten Geometrie der Verschlusseinheit 30, welche selbst damit modulartig ausgestaltet ist, automatisiert gefertigt und am Ankerkörper 32 befestigt werden kann, wie radial um den Umfang der Baugruppe 30 herum verteilte Durchbrüche in Form von Bohrungen 56 Teil des Fluidkanals zum Entlüftungsanschluss E sind, mit anderen Worten, sowohl eine Fluidkommunikation P-A, als auch A-E verläuft jeweils über diese Durchbrüche im harten Kunststoffmaterial des Trägers 34 der Baugruppe 30, bevor das Fluid dann in den durch die Bohrung 24 gebildeten zentrischen Kanal im Kern 18 eintritt und zum Auslass E gelangt. Hierdurch wird deutlich, dass der in ansonsten bekannter Weise in einem Ankerführungsrohr 58 aus einem nicht-magnetischen Material geführte Ankerkörper 32 keine mantelseitigen Schlitze, Profilierungen oder dgl. fluidführende Abschnitte aufweist, so dass weder das Ankerführungsrohr 58 eingekerbt oder auf andere Weise mechanisch im Dauerbetrieb belastet ist, noch etwa durch derartige, gegenüber dem Stand der Technik unnötige mantelseitige Nuten ein wirksamer Magnetquerschnitt nachteilig verkleinert wird.

Zusätzlich relevant für das magnetische Bewegungs- und Effizienzverhalten der Vorrichtung ist ein im Rohr- bzw. Hülsenabschnitt 22 gebildeter mantelseitiger Einstich 60, welcher, radial eine Wand des Abschnitts 20 abtragend, einen signifikanten Magnetflusswiderstand im zugehörigen Bereich des Rohr- bzw. Hülsenabschnitts 22, benachbart dem Körper 20, anbietet. Dabei wird so viel Material abgetragen, dass im Bereich 60 eine magnetische Sättigung bei Flussbeaufschlagung auftritt. Vorteilhafter Effekt dieser Maßnahme ist, dass ein wesentlicher Magnetfluss - kraft- und bewegungswirksam - über einen Konusbereich 62 zum Anker fließt und nicht etwa stirnseitig bzw. im Bereich des Auslasses 26 einen magnetisch ineffizienten Nebenflusskreis schließt

Das zweite Ausführungsbeispiel der Fig. 2 entspricht strukturell weitgehend dem ersten Ausführungsbeispiel der Fig. 1; so ist etwa sowohl das Gehäuse mit innenliegenden Elektromagnet-Komponenten, als auch die Ankerstruktur und die Bewegungs- und Schaltfunktionalität identisch mit dem ersten Ausführungsbeispiel der Fig. 1. Dabei bedeuten mit der Fig. 1 identische Bezugszeichen identische bzw. funktional unmittelbar äquivalente Baugruppen bzw. Komponenten, so dass im Hinblick auf die Fig. 2 insoweit auf eine erneute Beschreibung dieser (identischen) Komponenten verzichtet wird und auf die vorstehende Beschreibung zur Fig. 1 zu verweisen ist.

Der wesentliche Unterschied des zweiten Ausführungsbeispiels der Fig. 2 zum ersten Ausführungsbeispiel der Fig. 1 besteht in einer alternativen Ausgestaltung des im magnetischen bzw. Magnetfluss-Widerstand erhöhten Abschnitts 29 am Übergangsbereich zwischen dem Rohr- bzw. Hülsenabschnitt 22 und dem Kernkörper 20. Auch hier sind beide Baugruppen einstückig miteinander verbunden, wobei durch den in der wirksamen Materialdicke reduzierten Übergangsabschnitt 29 analog zur vorbeschriebenen Weise der Fig. 1 eine frühe magnetische Sättigung auftritt und entsprechend die gewünschte magnetische Entkopplung des Magnetflusses zum (axial) vorderen Rohr- bzw. Hülsenabschnitt 22 auftritt.

Im Gegensatz zum ersten Ausführungsbeispiel ist die Materialreduktion am Abschnitt 29 realisiert durch eine eine durchgehende Bohrung 25 (insoweit entsprechend der Bohrung 24 in Fig. 1) aufweitende, aus der Richtung des Entlüftungsanschlusses E in den Kernkörper 20 eingebrachte weitere Bohrung 27, welche, da die Bohrung 25 von innen her aufweitend, den widerstandserhöhenden Abschnitt 29 in seiner axialen Erstreckung bestimmt zwischen dem Ende des Kernköpers 20 und einer Eindringtiefe der Bohrung 27 in den Rohr- bzw. Hülsenabschnitt 22 hinein. Es wird deutlich, dass neben dieser Verlagerung des erfindungsgemäßen Materialabtrags radial nach innen zusätzlich eine fertigungstechnisch einfache und elegante Alternative zu einem Dreh- oder Fräsvorgang geschaffen ist, mit welchem beim ersten Ausführungsbeispiel der Fig. 1 die Nut 60 geschaffen wurde. Insoweit ist dann auch die zusätzliche, aufweitende Bohrung 27 in Fig. 2 lediglich als exemplarische Möglichkeit zur Realisierung eines Materialabtrags von innen zu verstehen; auch mit alternativen Spanwerkzeugen, etwa abgewinkelten oder gekröpften Fräswerkzeugen, ließe sich ein im magnetischen Widerstand erhöhter Abschnitt im Kernmaterial in der gewünschten axialen Erstreckung erzeugen.

Während die in den Fig. 1 und Fig. 2 gezeigten Ausführungsbeispiele ein Pneumatik-3/2-Wegeventil sind, welches, besonders geeignet etwa für Anwendungen in Pneumatiksystemen in Kraftfahrzeugen, eine NC-Ausgestaltung realisiert, ist es durch einfaches Vertauschen der Anschlüsse an P bzw. E möglich, diese Vorrichtungen als NO (damit also im unbestromten Zustand der Spule 16 geöffnet) zu verwenden. Auch lassen sich durch lediglich teilweise Beschaltung der drei Fluidanschlüsse P, E, A die gezeigten Vorrichtungen als 2/2-Wegeventil einsetzen.

## Patentansprüche

1. Elektromagnetisch betätigbare Ventilvorrichtung mit einem Ventilgehäuse (10), das einen ersten (P) und einen zweiten (E), jeweils zum gesteuerten Öffnen und Verschließen durch Bewegung einer Verschlusseinheit (30) ausgebildeten Fluidanschluss sowie mindestens einen am Ventilgehäuse vorgesehenen, einen durch die Verschlusseinheit wechselweise unterbrechbaren Fluidkanal (46) zum ersten bzw. zweiten Fluidanschluss ausbildenden weiteren Fluidanschluss (A) aufweist, wobei die Verschlusseinheit an oder in einer im Ventilgehäuse entlang einer Bewegungslängsachse (12) bewegbar geführten und als Reaktion auf eine Bestromung einer stationär im Ventilgehäuse vorgesehenen Spuleneinheit (14, 16) antreibbaren Ankereinheit (28) vorgesehen ist und zwischen einander gegenüberliegenden ersten und zweiten Verschlusspositionen bewegbar ist, zum magnetischen Zusammenwirken mit einer zumindest abschnittsweise von der Spuleneinheit umschlossen stationären Kerneinheit (18) ausgebildet ist und in eine der Verschlusspositionen durch an die Ankereinheit angreifende Kraftspeichermittel vorgespannt ist, wobei die erste der Verschlusspositionen durch einen mit dem ersten Fluidanschluss verbundenen Ventilsitz (44) realisiert ist, wobei die Kraftspeichermittel einends mit der Ankereinheit und anderenends mit der Kerneinheit so verbunden sind oder zusammenwirken, dass die Kraftspeichermittel außerhalb des Fluidkanals vom zweiten Fluidanschluss zum weiteren Fluidanschluss liegen, **dadurch gekennzeichnet, dass** die Kerneinheit einen einen Kernkörper (20) axial und einstückig, im Durchmesser gegenüber diesem verringerten, langgestreckten, endseitig die dem zweiten Fluidanschluss zugeordnete zweite Fluidposition ausbildenden Rohr- und/oder Hülsenabschnitt (22) aufweist, der axial von einem Abschnitt der Ankereinheit übergriffen wird und/oder in eine in der Ankereinheit eingeformte Vertiefung greift und der in einem Abschnitt ein/e Nut, Materialvertiefung, Materialeinstich (60, 29), Materialabtrag so aufweist, dass an diesem Abschnitt eine magnetische Widerstandserhöhung für einen durch den Rohr- bzw. Hülsenabschnitt fließenden Magnetfluss auftritt, und wobei die Verschlusseinheit ein freies Ende des Rohr- und/oder Hülsenabschnitts zum Verschließen des zweiten Fluidanschlusses dichten kann.

2. Vorrichtung nach Anspruch 1, **dadurch gekennzeichnet, dass** die Kraftspeichermittel als zylindrische Druckfeder (42) ausgebildet sind und bevorzugt zum Zusammenwirken mit automatisierten Montagemitteln eingerichtet und ausgebildet sind.

3. Vorrichtung nach Anspruch 2, **dadurch gekennzeichnet, dass** die als Druckfeder ausgebildeten Kraftspeichermittel sich einends vom gegenüber dem Rohr- bzw. Hülsenabschnitt im Durchmesser verbreiterten Kernkörper der Kerneinheit und anderenends von einem inneren Widerlager, insbesondere Ringabsatz (52), der Ankereinheit abstützen.

4. Vorrichtung nach einem der Ansprüche 1 bis 3, **dadurch gekennzeichnet, dass** die axial beidseitig Verschlussflächen (38, 40) ausbildende Verschlusseinheit endseitig der Ankereinheit vorgesehen ist, insbesondere in diese integriert ausgebildet ist und/oder einen End- und/oder Bodenbereich der Ankereinheit realisiert.

5. Vorrichtung nach Anspruch 4, **dadurch gekennzeichnet, dass** die Verschlusseinheit eine axiale Erstreckung besitzt, die weniger als 30%, bevorzugt weniger als 20%, einer maximalen axialen Erstreckung der Ankereinheit aufweist.

6. Vorrichtung nach einem der Ansprüche 1 bis 5, **dadurch gekennzeichnet, dass** die einen Dichtkörper (36) aus einem elastischen Material aufweisende Verschlusseinheit (30) so ausgebildet ist, dass der Fluidkanal vom zweiten Fluidanschluss zum weiteren Fluidanschluss benachbart des Dichtkörpers durch einen stirnseitigen Durchlass und/oder Durchbruch (56) der Ankereinheit führt.

7. Vorrichtung nach Anspruch 6, **dadurch gekennzeichnet, dass** der Durchlass bzw. Durchbruch in einem den Dichtkörper haltenden Trägerabschnitt (34) aus einem unelastischen, bevorzugt polymeren, Material ausgebildet ist, der mit dem Dichtkörper eine bauliche Einheit und/oder eine Dichtbaugruppe als Verschlusseinheit zum bevorzugt endseitigen Festlegen an einen metallischen Material der Ankereinheit realisiert.

8. Vorrichtung nach einem der Ansprüche 1 bis 7, **dadurch gekennzeichnet, dass** im düsenartigen Rohr- bzw. Hülsenabschnitt eine bevorzugt zentrische, axial verlaufenden Bohrung (24; 25, 27) zur Fluidführung ausgebildet ist.

9. Vorrichtung nach Anspruch 8, **dadurch gekennzeichnet, dass** eine Wandstärke der Nut, Materialvertiefung bzw. des Materialabtrags bzw. des Materialeinstichs am Abschnitt, bezogen auf eine benachbarte unvertiefte Wandstärke des Rohr- bzw. Hülsenabschnitts, um mindestens 60%, weiter bevorzugt um mindestens 80%, abgetragen und/oder vertieft ist.

10. Vorrichtung nach Anspruch 8 oder 9, **dadurch gekennzeichnet, dass** die zentrische, axial verlaufende und durchgehende Bohrung (25, 27) eine eine Wandstärke der/des Nut, Materialvertiefung, Materialabtrags bzw. Materialeinstichs beeinflussende oder bestimmende Aufweitung am Abschnitt (29) der magnetischen Widerstandserhöhung aufweist und/oder ausbildet.

11. Vorrichtung nach Anspruch 10, **dadurch gekennzeichnet, dass** die Aufweitung durch eine sich durch den Kernkörper und bis zum Abschnitt (29) der magnetischen Widerstandserhöhung diesen ausbildend in den Rohr- bzw. Hülsenabschnitt erstreckende, weitere Bohrung (27) größeren Bohrungsdurchmessers realisiert ist.

12. Vorrichtung nach einem der Ansprüche 1 bis 11, **dadurch gekennzeichnet, dass** die bevorzugt topf- oder becherartig ausgebildete Ankereinheit einen zylindrischen Außenmantel ohne eine mantelseitige Profilierung oder einen mantelseitigen Fluidführungskanal, insbesondere ohne eine mantelseitige Fluidführungsnut, aufweist.

13. Verwendung der elektromagnetisch betätigbaren Ventilvorrichtung nach einem der Ansprüche 1 bis 12 als 2/2-Wegeventil und/oder für für pneumatisches Fluid, weiter bevorzugt für ein Kraftfahrzeug-Pneumatiksystem.

14. Verwendung der elektromagnetisch betätigbaren Ventilvorrichtung nach einem der Ansprüche 1 bis 12 als bezogen auf einen Fluidkanal vom zweiten Fluidanschluss zum ersten Fluidanschluss stromlos offenes sowie stromlos geschlossenes Ventil.

## Claims

1. An electromagnetically operable valve device comprising a valve housing (10) which has first (P) and second (E) fluid ports each configured to be opened and closed in a controlled manner by movement of a closing unit (30) and at least one other fluid port (A) which is provided on the valve housing and which forms a fluid channel (46) toward the first and second fluid ports which can be alternately interrupted by the closing unit, the closing unit being provided on or in an armature unit (28), which is guided within the valve housing in a displaceable manner along a longitudinal axis of movement (12) and can be driven in response to an energization of a coil unit (14, 16) provided stationary in the valve housing, and being displaceable between opposite first and second closed positions, being configured for magnetic interaction with a stationary core unit (18) which is at least partially surrounded by the coil unit
and being pre-loaded into one of the closed positions by force storage means acting on the armature unit, the first closed position being realized by a valve seat (44) connected to the first fluid port, the force storage means being connected or interacting with the armature unit at one end and with the core unit at the other end in such a manner that the force storage means are located outside of the fluid channel from the second fluid port to the other fluid port, **characterized in that** the core unit has an oblong tube and/or sleeve portion (22) realizing a core body (20) in an axial and integral manner, having a smaller diameter than the core body and forming, at its end, the second fluid position associated with the second fluid port, a portion of the armature unit axially engaging over the tube and/or sleeve portion (22) and/or the tube and/or sleeve portion engaging into a recess formed in the armature unit and the tube and/or sleeve portion having a groove, material depression, material puncture (60, 29), material erosion in one area in such a manner that an increase in magnetic resistance to a magnetic flux flowing through the tube or sleeve portion occurs in said area, and the closing unit being able to seal a free end of the tube and/or sleeve portion for closing the second fluid port.

2. The device according to claim 1, **characterized in that** the force storage means are configured as a cylindrical compression spring (42) and are preferably configured to interact with automated assembly means.

3. The device according to claim 2, **characterized in that** the force storage means configured as a cylindrical compression spring (42) bear on the core body of the core unit at one end, the core body having a greater diameter than the tube and/or sleeve portion, and on an inner abutment, in particular an annular shoulder (52), of the armature unit at the other end.

4. The device according to any one of claims 1 to 3, **characterized in that** the closing unit, which forms closing surfaces (38, 40) on both axial sides, is provided at the end of the armature unit, in particular integrated in the armature unit, and/or forms an end and/or bottom portion of the armature unit.

5. The device according to claim 4, **characterized in that** the closing unit has an axial extension that is less than 30 %, preferably less than 20 %, of a maximum axial extension of the armature unit.

6. The device according to any one of claims 1 to 5, **characterized in that** the closing unit (30), which has a sealing body (36) made of an elastic material, is configured in such a manner that the fluid channel from the second fluid port to the other fluid port runs adjacent to the sealing body through an end-side passage and/or opening (56) of the armature unit.

7. The device according to claim 6, **characterized in that** the passage or opening is formed in a support section (34) which supports the sealing body and which is made of an inelastic, preferably polymeric, material and which, together with the sealing body, forms a structural unit and/or a sealing module as a closing unit for being fixed in place on a metallic material of the armature unit, preferably at the end thereof.

8. The device according to any one of claims 1 to 7, **characterized in that** an axially extending, preferably centric, bore (24; 25, 27) for conducting fluid is formed in the nozzle-like tube and/or sleeve portion.

9. The device according to claim 8, **characterized in that** a wall thickness of the groove, material depression, material erosion or material puncture in the area is eroded and/or depressed by at least 60 %, more preferably by at least 80 %, with respect to an adjacent undepressed wall thickness of the tube and/or sleeve portion.

10. The device according to claim 8 or 9, **characterized in that** the axially extending, centric, and continuous bore (25, 27) has and/or forms a widening in the area (29) of increased magnetic resistance, said widening influencing or determining a wall thickness of the groove, material depression, material erosion or material puncture.

11. The device according to claim 10, **characterized in that** the widening is realized by another bore (27), which has a larger bore diameter and extends through the core body and as far as to the area (29) of increased magnetic resistance, forming the same, and into the tube and/or sleeve portion.

12. The device according to any one of claims 1 to 11, **characterized in that** the armature unit, which is preferably pot-shaped or cup-shaped, has a cylindrical outer wall without a wall-side profile or a wall-side fluid-conducting channel, in particular without a wall-side fluid-conducting groove.

13. A use of the electromagnetically operable valve device according to any one of claims 1 to 12 as a 2/2-way valve and/or for a pneumatic fluid, more preferably for an automotive pneumatic system.

14. A use of the electromagnetically operable valve device according to any one of claims 1 to 12 as a valve normally open and as a valve normally closed with respect to a fluid channel from the second fluid port to the first fluid port.

## Revendications

1. Dispositif de soupape à commande électromagnétique comprenant un boîtier de soupape (10) ayant un premier raccord de fluide (P) et un deuxième raccord de fluide (E) dont chacun est conçu pour être ouvert et fermé de manière contrôlé par un déplacement d'une unité de fermeture (30) et ayant au moins un autre raccord de fluide (A) qui est prévu sur le boîtier de soupape et qui forme un canal de fluide (46) vers le premier ou le deuxième raccord de fluide, ledit canal de fluide (46) pouvant être interrompu en alternance par l'unité de fermeture, l'unité de fermeture étant prévue sur ou dans une unité d'induit (28) qui est guidée de manière déplaçable le long d'un axe de déplacement longitudinal (12) dans le boîtier de soupape et qui peut être entrainée en réponse à une alimentation en courant d'une unité de bobine (14, 16) prévue de manière stationnaire dans le boîtier de soupape et étant déplaçable entre une première et une deuxième position de fermeture qui sont opposées l'une à l'autre et étant conçue pour l'interaction magnétique avec une unité de noyau (18) stationnaire entourée au moins par sections par l'unité de bobine et étant précontrainte dans une des positions de fermeture par des moyens d'accumulation de force ayant prise sur l'unité d'induit, la première des positions de fermeture étant réalisée par un siège de soupape (44) relié au premier raccord de fluide, les moyens d'accumulation de force étant reliés à ou interagissant avec l'unité d'induit à une extrémité et l'unité de noyau à l'autre extrémité de telle manière que les moyens d'accumulation de force sont situés en dehors du canal de fluide du deuxième raccord de fluide à l'autre raccord de fluide, **caractérisé en ce que**, l'unité de noyau comprend une partie de tube et/ou de manchon (22) réalisant un corps de noyau (20) axialement et en une pièce, ayant un diamètre inférieur par rapport audit corps de noyau (20), étant allongée et formant, à son extrémité, la deuxième position de fluide assignée au deuxième raccord de fluide, ladite partie de tube et/ou de manchon (22) étant recouverte axialement par une partie de l'unité d'induit et/ou s'engrenant dans une cavité formée dans l'unité d'induit et ayant, dans une partie, une rainure, une cavité de matériau, une entaille de matériau (60, 29), un enlèvement de matériau de telle manière qu'une augmentation de résistance magnétique se produit sur cette partie pour un flux magnétique traversant la partie de tube et/ou de manchon, et l'unité de fermeture pouvant étancher une extrémité libre de la partie de tube et/ou de manchon afin de fermer le deuxième raccord de fluide.

2. Dispositif selon la revendication 1, **caractérisé en ce que** les moyens d'accumulation de force sont réalisés comme ressort de pression (42) cylindrique et sont, de préférence, réalisés et conçus pour l'interaction avec des moyens de montage automatisés.

3. Dispositif selon la revendication 2, **caractérisé en ce que** les moyens d'accumulation de force réalisés comme ressort de pression appuient, à l'une extrémité, contre le corps de noyau de l'unité de noyau ayant un diamètre élargi par rapport à la partie de tube et/ou de manchon et, à l'autre extrémité, contre une butée intérieure, notamment un épaulement annulaire (52), de l'unité d'induit.

4. Dispositif selon l'une quelconque des revendications 1 à 3, **caractérisé en ce que** l'unité de fermeture axialement formant des surfaces de fermeture (38, 40) des deux côtés est prévue sur l'extrémité de l'unité d'induit, notamment est intégrée dans ladite unité d'induit, et/ou réalise une partie d'extrémité et/ou de fond de l'unité d'induit.

5. Dispositif selon la revendication 4, **caractérisé en ce que** l'unité de fermeture a une extension axiale qui a moins de 30 %, de préférence moins de 20 %, d'une extension axiale maximale de l'unité d'induit.

6. Dispositif selon l'une quelconque des revendications 1 à 5, **caractérisé en ce que** l'unité de fermeture (30) comprenant un corps d'étanchéité (36) en matériau élastique est réalisée de telle manière que le canal de fluide du deuxième raccord de fluide à l'autre raccord de fluide passe par un passage et/ou perçage (56) frontal de l'unité d'induit.

7. Dispositif selon la revendication 6, **caractérisé en ce que** le passage ou perçage est réalisé dans une partie de support (34) en matériau inélastique, de préférence en matériau polymère, qui supporte le corps d'étanchéité et qui, conjointement avec le corps d'étanchéité, réalise une unité structurelle et/ou un ensemble d'étanchéité comme unité de fermeture pour la fixation sur une matériau métallique de l'unité d'induit, de préférence à l'extrémité.

8. Dispositif selon l'une quelconque des revendications 1 à 7, **caractérisé en ce qu'**un alésage (24 ; 25, 27), de préférence central, qui s'étend dans la direction axiale et qui est destiné à guider le fluide est réalisé dans la partie de tube et/ou de manchon en forme de buse.

9. Dispositif selon la revendication 8, **caractérisé en ce qu'**une épaisseur de paroi de la rainure, de la cavité de matériau ou de l'entaille de matériau ou de l'enlèvement de matériau à la partie est enlevée et/ou évidée d'au moins 60 %, de préférence d'au moins 80 %, par rapport à une épaisseur de paroi adjacente et non-évidée de la partie de tube et/ou de manchon.

10. Dispositif selon la revendication 8 ou la revendication 9, **caractérisé en ce que** l'alésage (25, 27) central et continu qui s'étend dans la direction axiale a et/ou réalise un élargissement sur la partie (29) de l'augmentation de résistance magnétique, l'élargissement influençant ou définissant l'épaisseur de paroi de la rainure, de la cavité de matériau, de l'entaille de matériau ou de l'enlèvement de matériau.

11. Dispositif selon la revendication 10, **caractérisé en ce que** l'élargissement est réalisé par un autre alésage (27) qui a un plus grand diamètre d'alésage et qui s'étend à travers le corps de noyau à la partie (29) de l'augmentation de résistance magnétique en réalisant ladite partie (29) dans la partie de tube et/ou de manchon.

12. Dispositif selon l'une quelconque des revendications 1 à 11, **caractérisé en ce que** l'unité d'induit qui est, de préférence, en forme de pot ou de gobelet a une enveloppe extérieure cylindrique sans profilage du côté de l'enveloppe ou sans canal de guidage de fluide du côté de l'enveloppe, notamment sans rainure de guidage de fluide du côté de l'enveloppe.

13. Utilisation du dispositif de soupape à commande électromagnétique selon l'une quelconque des revendications 1 à 12 comme soupape à 2/2 voies et/ou pour un fluide pneumatique, plus préférentiellement pour un système pneumatique d'un véhicule automobile.

14. Utilisation du dispositif de soupape à commande électromagnétique selon l'une quelconque des revendications 1 à 12, comme soupape ouverte sans courant et fermée sans courant par rapport à un canal de fluide du deuxième raccord de fluide au premier raccord de fluide.
